# EUROPÄISCHE PATENTSCHRIFT

(11) **EP 3 571 105 B1**
(45) Veröffentlichungstag und Bekanntmachung des Hinweises auf die Patenterteilung: **06.04.2022**
(21) Anmeldenummer: 18701259.6
(22) Anmeldetag: 09.01.2018
(51) Int. Cl.: B60W 50/14, B60W 50/00

(54) **VERFAHREN UND ANORDNUNG ZUR INTERAKTION MIT EINEM VORSCHLAGSSYSTEM MIT AUTOMATISIERTEN BEDIENHANDLUNGEN**
METHOD AND ASSEMBLY FOR INTERACTING WITH A PROPOSAL SYSTEM WITH AUTOMATED OPERATING ACTIONS
PROCÉDÉ ET SYSTÈME D'INTERACTION AVEC UN SYSTÈME DE RECOMMANDATION À L'AIDE D'ACTIONS DE COMMANDE AUTOMATISÉES

(30) Priorität: 18.01.2017 DE 102017200735
(43) Veröffentlichungstag der Anmeldung: 27.11.2019
(73) Patentinhaber: Volkswagen Aktiengesellschaft, 38440 Wolfsburg (DE)
(72) Erfinder: PALZER, Daniel, 10967 Berlin (DE); SCHÄFER, Helge, 31275 Lehrte (DE)
(86) Internationale Anmeldenummer: PCT/EP2018/050391
(87) Internationale Veröffentlichungsnummer: WO 2018/134073

(56) Entgegenhaltungen:
- EP-A2- 2 017 774
- DE-A1- 10 315 047
- DE-A1-102009 045 511
- DE-A1-102012 005 866
- JP-A- 2016 064 773
- US-A1- 2014 062 946

## Beschreibung

### Gebiet der Erfindung

Die vorliegende Erfindung betrifft ein Verfahren und eine Anordnung zur Interaktion mit einem Vorschlagssystem mit automatisierten Bedienhandlungen, das insbesondere bei einer grafischen Benutzerschnittstelle in einem Fahrzeug eingesetzt werden kann. Die vorliegende Erfindung betrifft weiterhin ein Fahrzeug, das eingerichtet ist, ein solches Verfahren auszuführen oder eine solche Anordnung aufweist.

### Hintergrund der Erfindung

In vielen Bereichen der Technik werden für eine Interaktion mit Maschinen und Geräten Benutzerschnittstellen (abgekürzt HMI von englisch "Human Machine Interface") eingesetzten, wobei grafische Benutzeroberflächen bzw. Benutzerschnittstellen (abgekürzt GUI von englisch "Graphical User Interface") mittlerweile weit verbreitet sind. Mit grafischen Benutzerschnittstellen lassen sich grafische Elemente und komplexe Bedienabläufe auf einer Bildschirmoberfläche darstellen. Eine Bedienung kann durch eine Vielzahl verschiedener Eingabegeräte erfolgen, beispielsweise durch Berührung einer berührungsempfindlichen Displayoberfläche, einem sogenannten Touchscreen.

Bei einem HMI mit umfangreichem Funktionsumfang bzw. einer Vielzahl von Funktionalitäten kann die Komplexität so groß sein, dass diese nicht alle gleichzeitig in sinnvoller Weise angezeigt werden können, selbst wenn das HMI mehrere Displays umfassen sollte. Auch besteht die Gefahr, dass durch eine Anzeige einer Vielzahl von Bild- und/oder Bedienelementen die Übersichtlichkeit und Bedienbarkeit des GUIs leidet.

Dieses kann beispielsweise bei einer Verwendung von GUIs im Automobilbereich, insbesondere wenn sich diese an den Führer eines Fahrzeugs während der Fahrt richten, problematisch sein. In diesem Fall sollte die Darstellung von Informationen und die Bedienung so einfach und intuitiv wie möglich sein um eine Ablenkung von der Fahraufgabe zu minimieren und so die Fahrsicherheit zu gewährleisten.

Die Ablenkung bzw. Störung des Fahrzeugführers kann verringert und der Bedienkomfort erhöht werden, indem das Nutzerverhalten und die Nutzungssituation erfasst werden um basierend hierauf die Bedienung je nach Situation anzupassen bzw. zu automatisieren oder dem Nutzer Empfehlungen für die Bedienung zu unterbreiten.

Ein System und ein Verfahren zum Vorschlagen und Automatisieren von Aktionen in einem Fahrzeug wird in der US 20160068169 A1 beschrieben, wobei Empfehlungen gegeben werden wenn ein verbesserbares Verhalten vorliegt. Ähnlich offenbart die US 20150160019 A1 ein fahrzeuginternes Computersystem, das automatisch Aktionen ausführt um sicherzustellen dass die kognitive Belastung für den Fahrer nicht zu hoch wird. So kann beispielsweise ein eingehender Telefonanruf automatisch abgewiesen werden und dem Fahrer eine Information hierüber angezeigt werden.

Die DE 10 2009 045 511 A1 zeigt eine Vorrichtung zum Erlernen einer Funktion einer Bedienhilfe eines Kraftfahrzeugs . Hierbei wird von einem Ortungssystem eine Ortsposition des Kraftfahrzeugs und über eine Mensch-Maschine-Schnittstelle eine durch einen Benutzer ausgelöste erste Steueranweisung empfangen. Eine Bedienhilfe wird aktiviert oder deaktiviert, falls die erste Steueranweisung bereits während einer festgelegten Anzahl von Fahrten des Kraftfahrzeugs jeweils in einem festgelegten Umkreis um eine gegenwärtige Ortsposition ausgelöst wurde.

Gemäß einer dort beschriebenen Ausführungsform besteht die Bedienhilfe darin, die erste Steueranweisung während einer nachfolgenden Fahrt selbsttätig auszulösen oder dem Benutzer ein Auslösen der Steueranweisung über die Mensch-Maschine-Schnittstelle anzubieten, sobald das Kraftfahrzeug in den festgelegten Umkreis um die Ortsposition einfährt. Gemäß einer weiteren Ausführungsform ist die durch den Benutzer ausgelöste erste Steueranweisung eine Steueranweisung, die eine zuvor durch das Kraftfahrzeug automatisch ausgelöste zweite Steueranweisung rückgängig macht. In diesem Fall besteht die Bedienhilfe darin, die zweite Steueranweisung während einer nachfolgenden Fahrt nicht selbsttätig auszulösen, wenn das Kraftfahrzeug in den festgelegten Umkreis um die Ortsposition einfährt. So können Automatikfunktionen des Kraftfahrzeugs verlernt bzw. deaktiviert werden.

Weiterhin offenbart die US 2014/0062946 A1 für eine Anzeige eines Fahrzeugs, dass diese angepasst wird, wenn sich ein Finger des Fahrers in der Nähe eines Bedienfelds, das als Touchscreen ausgestaltet sein kann, befindet. Hierbei wird ein Symbol für ein Bedienelement des Bedienfelds, das dem Finger des Fahrers am nächsten ist, in der Anzeige hervorgehoben angezeigt, so dass der Fahrer ohne auf das Bedienfeld zu schauen durch Betrachten der Anzeige erkennen kann, dass der Finger diesem Bedienelement am nächsten ist. Die Anzeige kann auf einem Head-up-Display eines Fahrzeugs oder einem im Bereich des Armaturenbretts angeordneten Display erfolgen.

### Zusammenfassung der Erfindung

Es ist eine Aufgabe der Erfindung, ein Verfahren und eine Anordnung zur Interaktion mit einem Vorschlagssystem mit automatisierten Bedienhandlungen zur Verfügung zu stellen, dass eine geringe Komplexität der Interaktion aufweist und insbesondere in einem Fahrzeug eingesetzt werden kann.

Diese Aufgabe wird durch ein Verfahren mit den Merkmalen des Anspruchs 1, sowie durch eine entsprechende Anordnung gemäß Anspruch 5 gelöst. Bevorzugte Ausgestaltungen der Erfindung sind Gegenstand der abhängigen Ansprüche.

Das erfindungsgemäße Verfahren zur Interaktion mit einem Vorschlagssystem mit automatisierten Bedienhandlungen umfasst die folgenden Schritte:
- generieren einer Empfehlung für eine Bedienhandlung;
- ermitteln eines Wahrscheinlichkeitswerts für die Ausführung der empfohlenen Bedienhandlung;
- automatisches ausführen der empfohlenen Bedienhandlung, wenn für diese ein hoher Wahrscheinlichkeitswert ermittelt wird;
- anzeigen einer Information über die automatisch ausgeführte Bedienhandlung sowie eines Bedienelements zum Abbruch oder Rückgängigmachen der automatisch ausgeführten Bedienhandlung;
- erfassen einer Betätigung des angezeigten Bedienelementes durch einen Nutzer;
- abbrechen oder rückgängig machen der automatisch ausgeführten Bedienhandlung bei Betätigung des angezeigten Bedienelementes.

Die erfindungsgemäße Interaktion mit einem Vorschlagssystem mit automatisierten Bedienhandlungen ermöglicht auf einfache und intuitive Weise eine automatisch ausgeführte Bedienhandlung in nur einem Bedienschritt abzubrechen oder rückgängig zu machen und ermöglicht so die Beibehaltung der Kontrolle durch den Nutzer auch bei automatisch ausgeführten Bedienhandlungen.

Gemäß einer Ausführungsform der Erfindung wird die Information über die automatisch ausgeführte Bedienhandlung auf einem ersten Display anzeigt und das Bedienelement zum Abbruch oder Rückgängigmachen der automatisch ausgeführten Bedienhandlung auf einem zweiten Display anzeigt.

Durch die Aufteilung der Anzeige von einerseits einer Information über die automatisch ausgeführte Bedienhandlung und andererseits einem Bedienelement zum Abbruch der automatisch ausgeführten Bedienhandlung auf separate Displays wird die Übersichtlichkeit gesteigert. Ferner erlaubt dieses eine Anzeige der Information auf einem ersten Display, welches im unmittelbaren Blickfeld des Nutzers ist aber gegebenenfalls nicht ohne weiteres zu bedienen ist und die separate Bedienung über ein hierfür besonders geeignetes zweites Display.

Vorteilhafterweise wird der Wahrscheinlichkeitswert für die Ausführung der empfohlenen Bedienhandlung aus dem bisherigen Nutzerverhalten und/oder äußeren Parametern ermittelt.

Vorteilhafterweise können die äußeren Parameter zur Ermittlung des Wahrscheinlichkeitswerts die aktuelle Zeit und/oder die aktuelle Position des Nutzers umfassen.

Entsprechend umfasst eine erfindungsgemäße Anordnung zur Interaktion mit einem Vorschlagssystem für Bedienhandlungen eine Steuereinheit, mindestens ein Display und eine Erfassungseinheit, wobei
- die Steuereinheit eine Empfehlung zur Bedienung einer Bedienhandlung generiert, einen Wahrscheinlichkeitswerts für die Ausführung der empfohlenen Bedienhandlung ermittelt und die empfohlene Bedienhandlung automatisch ausführt, wenn für diese ein hoher Wahrscheinlichkeitswert ermittelt wird;
- auf dem mindestens einen Display eine Information über die automatisch ausgeführte Bedienhandlung sowie ein Bedienelement zum Abbruch oder Rückgängigmachen der automatisch ausgeführten Bedienhandlung anzeigt wird;
- die Erfassungseinheit eine Betätigung des angezeigten Bedienelementes durch den Nutzer erfasst;
- und die Steuereinheit die automatisch ausgeführte Bedienhandlung bei Betätigung des Bedienelementes abbricht oder rückgängig macht.

Besonders vorteilhaft kann die erfindungsgemäße Anordnung in einem Fahrzeug vorgesehen sein, wobei das Vorschlagssystem Bedienhandlungen für ein Infotainmentsystem des Fahrzeugs empfiehlt.

Gemäß einer vorteilhaften Weiterbildung dieser Ausführungsform der Erfindung wird die Information über die automatisch ausgeführte Bedienhandlung auf einem Kombiinstrument und/oder einer Head-up-Display-Anzeige und das Bedienelement zum Abbruch der automatisch ausgeführten Bedienhandlung auf einem weiteren, insbesondere seitlich vom Lenkrad angeordneten, Display des Fahrzeugs angezeigt.

Weiterhin kann bei dieser Weiterbildung das seitlich vom Lenkrad angeordnete Display als Touchscreen-Display ausgebildet sein und die automatisch ausgeführte Bedienhandlung durch Berührung der berührungsempfindlichen Oberfläche des Touchscreen-Displays an der Position des dargestellten Bedienelementes abgebrochen oder rückgängig gemacht werden.

Vorzugsweise kann die Information über die automatisch ausgeführte Bedienhandlung auf dem Kombiinstrument temporär in einem Teilbereich der Anzeige dem aktuellen Kontext überlagert werden.

Weitere Merkmale der vorliegenden Erfindung werden aus der nachfolgenden Beschreibung und den Ansprüchen in Verbindung mit den Figuren ersichtlich.

### Kurze Beschreibung der Figuren

- Fig. 1: zeigt schematisch das erfindungsgemäße Verfahren zur Interaktion mit einem Vorschlagssystem für Bedienhandlungen;
- Fig. 2: zeigt schematisch für eine Ausführungsform eines Vorschlagssystems in einem Fahrzeug eine displayübergreifende grafische Benutzerschnittstelle mit der Möglichkeit der Interaktion durch den Nutzer; und
- Fig. 3: zeigt schematisch ein Blockschaltbild einer erfindungsgemäßen Anordnung.

### Detaillierte Beschreibung der Ausführungsformen

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

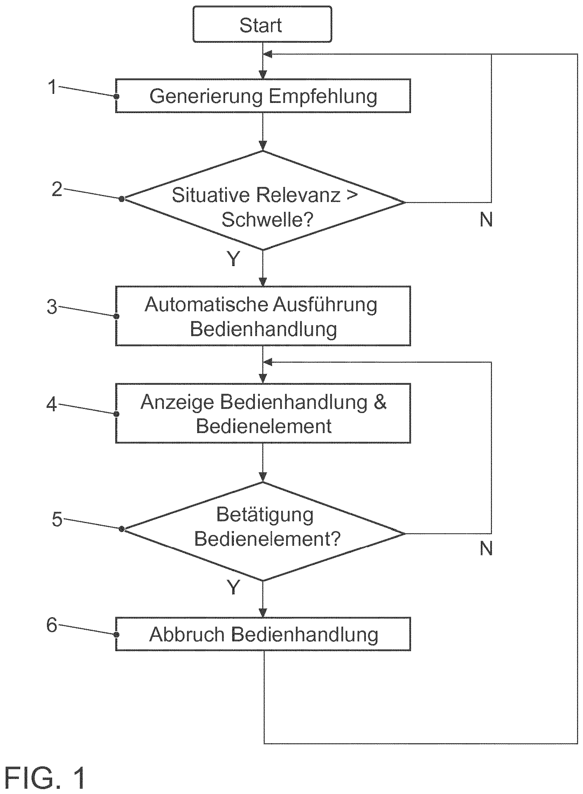

Figur 1 zeigt schematisch ein Flussdiagramm für eine Ausführungsform des erfindungsgemäßen Verfahrens. Beispielhaft wird auf eine Verwendung für ein InfotainmentSystem eines Fahrzeugs Bezug genommen. Das Vorschlagssystem liefert hierbei Empfehlungen für Bedienhandlungen eines im Fahrzeug integrierten Infotainmentsystems, kann aber beispielsweise ebenso für ein Fahrerassistenzsystem des Fahrzeugs eingesetzt werden.

In einem ersten Schritt 1 wird eine Empfehlung zur Bedienung einer Funktion generiert. Die Empfehlung kann hierbei insbesondere basierend auf dem bisherigen Nutzerverhalten in Korrelation mit äußeren Parametern wie der aktuellen Zeit und dem aktuellen Ort des Nutzers ermittelt werden. Beispiele für solche Empfehlungen im Auto-Infotainmentbereich können beispielsweise sein zur vollen Stunde das Radio einzuschalten und auf einen bestimmten Sender abzustimmen um Nachrichten zu empfangen oder die Musikwiedergabe aus einer Musiksammlung zu starten, sobald das Fahrzeug auf eine Autobahn auffährt. Unabhängig davon, ob eine empfohlene Bedienhandlung später gegebenenfalls automatisch ausgeführt wird, kann diese dem Nutzer angezeigt werden, sodass dieser sich entscheiden kann, ob er dem Vorschlag folgen will und die empfohlene Bedienhandlung manuell auslösen möchte.

In dem darauf folgenden Schritt 2 wird dann ein Wahrscheinlichkeitswert für die situative Relevanz der empfohlenen Bedienhandlung ermittelt und mit einem Schwellwert verglichen. Der Wahrscheinlichkeitswert gibt an, ob der Vorschlag für den Nutzer zu diesem Zeitpunkt passend ist bzw. ob basierend auf dem gelernten bisherigen Nutzerverhalten eine Bedienhandlung durch den Nutzer wahrscheinlich ist. Für die oben gegebenen Beispiele bedeutet dieses, dass ermittelt wird ob der Nutzer in der Vergangenheit regelmäßig zur vollen Stunde das Radio zum Nachrichtenempfang eingeschaltet und auf einen bestimmten Sender abgestimmt hat oder die Musikwiedergabe bei der Auffahrt auf eine Autobahn gestartet hat. Ebenso kann, falls die jeweilige Bedienhandlung bereits in der Vergangenheit automatisch ausgeführt wurde, berücksichtigt werden ob der Nutzer es bei der automatischen Ausführung belassen hat oder diese etwa abgebrochen bzw. rückgängig gemacht hat.

Ist der ermittelte Wahrscheinlichkeitswert der Empfehlung größer als ein vordefinierter Schwellwert, so wird die Bedienhandlung dem Nutzer nicht lediglich als Empfehlung vorgeschlagen sondern im darauffolgenden Schritt 3 automatisch ausgeführt, so startet beispielsweise automatisch die oben erwähnte Nachrichten- oder Musikwiedergabe. Andernfalls geht das Verfahren an den Anfang zurück und generiert gegebenenfalls neue Empfehlungen.

Eine Information über die automatisch ausgeführte Bedienhandlung sowie ein Bedienelement zum Abbruch oder Rückgängigmachen der automatisch ausgeführten Bedienhandlung wird dann dem Nutzer in Schritt 4 angezeigt.

Im darauffolgenden Schritt 5 wird überprüft, ob das angezeigte Bedienelement durch den Nutzer betätigt wurde. Ist dies der Fall, so wird im darauffolgenden Schritt 6 die automatisch ausgeführte Bedienhandlung abgebrochen oder rückgängig gemacht. Danach wird auch hier das Verfahren mit der Generierung neuer Empfehlungen fortgesetzt.

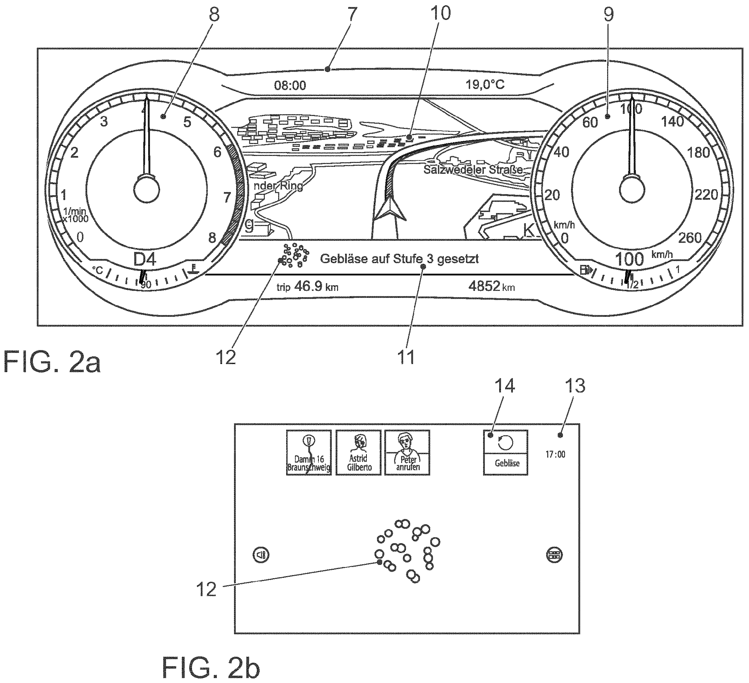

Figur 2 zeigt schematisch für eine mögliche Ausführungsform eines Vorschlagssystems in einem Fahrzeug eine displayübergreifende grafische Benutzerschnittstelle mit der Möglichkeit der Interaktion durch den Nutzer.

In Figur 2 a) ist ein frei programmierbares Kombiinstrument 7 dargestellt, dass typischerweise hinter dem Lenkrad angeordnet ist. Auf dem Kombiinstrument sind zwei, klassischen Rundinstrumenten nachempfundene Anzeigen 8, 9 für Drehzahl und Geschwindigkeit des Fahrzeugs dargestellt. Neben weiteren Parametern wie Uhrzeit Temperaturen und Kilometerstand wird zwischen Drehzahl- und Geschwindigkeitsanzeige 8, 9 ein Teil einer Navigationskarte 10 wiedergegeben. Unterhalb des Kartenausschnitts wird eine Information 11 über eine automatisch ausgeführte Bedienhandlung wiedergegeben, in diesem Fall, dass das "Gebläse auf Stufe 3 gesetzt" wurde. Neben dieser Textmeldung wird ein Bildsymbol 12 in Form einer Wolke aus Kugeln gezeigt, die darauf hinweist, dass das Vorschlagssystem aktiv ist und eine Empfehlung abgegeben bzw. automatisch ausgeführt hat. Zusätzlich kann das Bildsymbol 12 Systemzustände visualisieren. Sowohl die Textmeldung 11 als auch das Bildsymbol 12 können hierbei einen Teilbereich der Anzeige auf dem Kombiinstrument, beispielsweise den Teil der Navigationskarte, überlagern.

Um die automatisch ausgeführte Bedienhandlung abzubrechen oder rückgängig zu machen, wird auf einem weiteren Display 13, das beispielsweise im Bereich der Mittelkonsole zwischen Fahrer und Beifahrer angeordnet sein kann, ein entsprechendes Bedienelement 14 eingeblendet. Das Bedienelement 14 kann hierbei beispielsweise in Form eines Icons oder einer Kachel ausgestaltet sein, wobei der thematische Zusammenhang zu der automatisch ausgeführten Bedienhandlung durch einen Texthinweis, beispielsweise "Gebläse", verdeutlicht wird. Zusätzlich kann, beispielsweise durch ein geeignetes Bildsymbol, illustriert werden, dass durch eine Bedienung des Bedienelement der Abbruch bzw. das Rückgängigmachen der automatisch ausgeführten Bedienhandlung erfolgen würde. Zusätzlich zu dieser Kachel können weitere Kacheln mit Empfehlungen in Form einer Empfehlungsleiste dargestellt werden. Diese Empfehlungen können beispielsweise einen Zielort für die Navigation, einen Titel für die Musikwiedergabe oder einen Telefonkontakt betreffen. Weiterhin wird auch auf diesem zweiten Display 13 das auf das aktive Vorschlagssystem hinweisende Bildsymbol 11 angezeigt umso dem Nutzer die displayübergreifende Anzeige bzw. Bedienung zu verdeutlichen.

Wenn das zweite, im Bereich der Mittelkonsole angeordnete Display 13 als Touchscreen-Display ausgestattet ist, kann die automatisch ausgeführte Bedienhandlung durch Antippen der dargestellten Kachel rückgängig gemacht bzw. abgebrochen werden. Durch ein visuelles Feedback kann dann dem Nutzer dann bestätigt werden, dass die Bedienhandlung tatsächlich rückgängig gemacht bzw. abgebrochen wurde. Hierfür kann auf dem Kombiinstrument eine entsprechende Textmeldung wiedergegeben werden. Zusätzlich oder stattdessen kann ein entsprechender Hinweis in der Kachel erfolgen. Ebenso kann das auf das aktive Vorschlagssystem hinweisende Bildsymbol in der Darstellung oder Farbe verändert werden.

Die Information über die automatisch ausgeführte Bedienhandlung kann statt auf dem Kombiinstrument auch auf einem anderen Display wiedergegeben werden, beispielsweise auf einem Head-up-Display mit einer auf der Windschutzscheibe oberhalb des Lenkrads projizierten Anzeige. Ebenso kann das Bedienelement zum Abbruch oder Rückgängigmachen der automatisch ausgeführten Bedienhandlung statt auf einem Display im Bereich der Mittelkonsole auf einem Display auf der der Fahrertür zugewandten Seite des Lenkrads angezeigt werden.

Das im Fahrzeug integrierte Vorschlagssystem kann den Nutzer basierend auf verschiedenartigen Informationen bedarfsgerecht unterstützen. So können Interessen des Nutzers oder frühere Benutzungshandlung des Nutzers ebenso herangezogen werden wie das aktuelle Verhalten des Nutzers, dass durch eine Nutzerbeobachtung mittels geeigneter Sensoren im Fahrzeug erfasst werden kann. Ebenso kann vorgesehen sein, dass bei der Nutzung des Fahrzeugs durch mehrere Nutzer eine Unterscheidung der Nutzer erfolgt um das Nutzerverhalten der verschiedenen Nutzer separat zu erlernen und zukünftig zu berücksichtigen um an den jeweiligen Nutzer angepasste Empfehlungen bereitstellen zu können. Weiterhin kann die aktuelle Fahrsituation, beispielsweise basierend auf Fahrzeugparametern wie der aktuellen Geschwindigkeit, oder das aktuelle Umfeld des Fahrzeugs durch außen am Fahrzeug angebrachte Sensoren berücksichtigt werden.

Insbesondere kann das Vorschlagssystem auf Basis des Nutzerverhaltens in Kombination mit Zeit und/oder Ort der Bedienung wiederkehrende Routineinteraktionen detektieren und basierend hierauf automatisiert durchführen. Hierbei können bestimmte Funktionen, wie beispielsweise Fahrfunktionen oder Telefonanrufe, von der Automatisierung ausgenommen werden.

Ebenso kann berücksichtigt werden, wenn ein Nutzer eine automatisch ausgeführte Bedienhandlung wieder rückgängig macht, insbesondere wenn dieses mehrfach in der gleichen Situation erfolgt. In diesem Fall kann statt einer automatischen Ausführung der Bedienhandlung lediglich eine Empfehlung für diese Bedienhandlung gegeben werden oder aber auch hiervon gänzlich abgesehen werden.

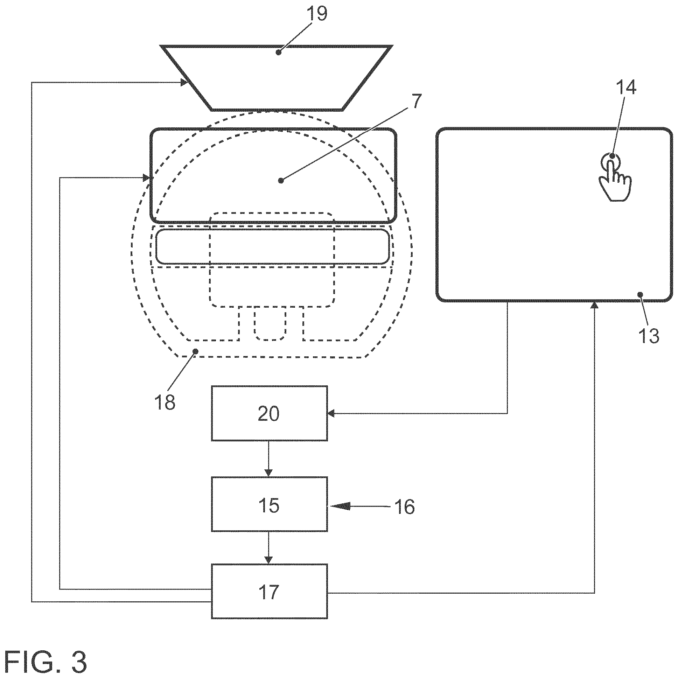

Figur 3 zeigt eine schematische Darstellung einer erfindungsgemäßen Anordnung. Eine Steuereinheit 15 generiert eine Empfehlung zur Bedienung einer Funktion, ermittelt einen Wahrscheinlichkeitswerts für die Ausführung der empfohlenen Bedienhandlung und führt die empfohlene Bedienhandlung automatisch aus, wenn für diese ein hoher Wahrscheinlichkeitswert ermittelt wird. So kann die Steuereinheit 15 beispielsweise eine Infotainment-Einrichtung oder auch andere Bauteile eines Fahrzeugs, wie beispielsweise das Gebläse, ansteuern. Der Steuereinrichtung 15 können hierfür verschiedene Parameter 16 wie beispielsweise die aktuelle Zeit oder der aktuelle Ort des Fahrzeugs, die Innentemperatur des Fahrzeugs, die aktuelle Fahrsituation oder das aktuell erfasste Nutzerverhalten zugeführt werden. Ebenso kann die Steuereinrichtung auf Informationen zum erlernten Nutzerverhalten zugreifen, die beispielsweise in einer Datenbank in einem fahrzeuginternen Speicher abgelegt sein können.

Wird eine empfohlene Bedienhandlung automatisch ausgeführt, so steuert die Steuereinheit eine Bilderzeugungs- und ausgabeeinheit 17 derart an, dass eine Information hierüber auf einem hinter dem angedeuteten Lenkrad 18 befindlichen Kombiinstrument 7 und/oder einem darüber befindlichen Head-up-Display 19 angezeigt wird. Ebenso veranlasst die Steuereinheit 15 die Bilderzeugung- und ausgabeeinheit 17 zur Darstellung eines Bedienelementes 14 zum Abbruch oder Rückgängigmachen der automatisch ausgeführten Bedienhandlung auf einem im Bereich der Mittelkonsole angeordneten Display 13, das als Touchscreen-Display ausgestattet ist. Ein Antippen der berührungsempfindlichen Oberfläche im Bereich des dargestellten Bedienelementes 14 wird durch eine Erfassungseinheit 20 erkannt, die eine Information hierüber der Steuereinheit 15 zuführt. Die Steuereinheit 15 bricht daraufhin die automatisch ausgeführte Bedienhandlung ab oder macht diese rückgängig und steuert die Bilderzeugungs- und ausgabeeinheit 17 derart an, dass die Darstellung der Hinweise auf die automatisch ausgeführte Bedienhandlung und des entsprechenden Bedienelementes angepasst oder ausgeblendet wird.

Die Erfindung kann vorteilhaft im Bereich der Fahrzeugtechnik eingesetzt werden, ist aber keineswegs darauf beschränkt. Vielmehr kann die Erfindung in beliebigen computerbasierten Systemen verwendet werden, bei denen eine Interaktion mit einem Vorschlagssystem für Bedienhandlungen in Kombination mit einer grafischen Benutzerschnittstelle erfolgt.

### Bezugszeichenliste

- 1: Verfahrensschritt mit Generierung einer Empfehlung für eine Bedienhandlung
- 2: Verfahrensschritt mit Ermittlung eines Wahrscheinlichkeitswerts und Vergleich mit einem Schwellwert
- 3: Verfahrensschritt mit automatischer Ausführung einer empfohlenen Bedienhandlung
- 4: Verfahrensschritt mit Anzeige der Bedienhandlung sowie eines Bedienelement zum Abbruch oder Rückgängigmachen der Bedienhandlung
- 5: Verfahrensschritt mit Überprüfung einer Betätigung des Bedienelementes
- 6: Verfahrensschritt mit Abbruch der automatisch ausgeführten Bedienhandlung
- 7: Kombiinstrument
- 8: Drehzahlmesser
- 9: Tachometer
- 10: Kartenausschnitt
- 11: Texthinweis auf automatisch ausgeführte Bedienhandlung
- 12: Bildsymbol für aktives Vorschlagssystem
- 13: Zweites Display
- 14: Kachel-Symbol für Abbruch der automatisch ausgeführten Bedienhandlung
- 15: Steuereinheit
- 16: Parameter
- 17: Bilderzeugungs- und ausgabeeinheit
- 18: Lenkrad
- 19: Head-up-Display
- 20: Erfassungeinheit

## Patentansprüche

1. Verfahren zur Interaktion mit einem Vorschlagssystem mit automatisierten Bedienhandlungen, wobei das Verfahren die folgenden Schritte umfasst:
- generieren (1) einer Empfehlung für eine Bedienhandlung;
- ermitteln (2) eines Wahrscheinlichkeitswerts für die Ausführung der empfohlenen Bedienhandlung;
- automatisches ausführen (3) der empfohlenen Bedienhandlung, wenn für diese ein hoher Wahrscheinlichkeitswert ermittelt wird;
- anzeigen (4) einer Information (11) über die automatisch ausgeführte Bedienhandlung sowie eines Bedienelements (14) zum Abbruch oder Rückgängigmachen der automatisch ausgeführten Bedienhandlung;
- erfassen (5) einer Betätigung des angezeigten Bedienelementes (14) durch einen Nutzer;
- abbrechen oder rückgängig machen (6) der automatisch ausgeführten Bedienhandlung bei Betätigung des angezeigten Bedienelementes (14).

2. Verfahren nach Anspruch 1, wobei die Information (11) über die automatisch ausgeführte Bedienhandlung auf einem ersten Display (7) anzeigt wird und das Bedienelement (14) zum Abbruch oder Rückgängigmachen der automatisch ausgeführten Bedienhandlung auf einem zweiten Display (13) anzeigt wird.

3. Verfahren nach Anspruch 1 oder 2, wobei der Wahrscheinlichkeitswert für die Ausführung der empfohlenen Bedienhandlung aus dem bisherigen Nutzerverhalten und/oder äußeren Parametern ermittelt wird.

4. Verfahren nach Anspruch 3, wobei die äußeren Parameter zur Ermittlung des Wahrscheinlichkeitswerts die aktuelle Zeit und/oder die aktuelle Position des Nutzers umfassen.

5. Anordnung zur Interaktion mit einem Vorschlagssystem mit automatisierten Bedienhandlungen, mit einer Steuereinheit (15), mindestens einem Display (7, 13, 19) und einer Erfassungseinheit (20), **dadurch gekennzeichnet, dass**
- die Steuereinheit (15) eine Empfehlung zur Bedienung einer Bedienhandlung generiert, einen Wahrscheinlichkeitswerts für die Ausführung der empfohlenen Bedienhandlung ermittelt und die empfohlene Bedienhandlung automatisch ausführt, wenn für diese ein hoher Wahrscheinlichkeitswert ermittelt wird;
- auf dem mindestens einen Display (7, 13, 19) eine Information (11) über die automatisch ausgeführte Bedienhandlung sowie ein Bedienelement (14) zum Abbruch oder Rückgängigmachen der automatisch ausgeführten Bedienhandlung anzeigt wird;
- die Erfassungseinheit (20) eine Betätigung des angezeigten Bedienelementes (14) durch den Nutzer erfasst;
- und die Steuereinheit (15) die automatisch ausgeführte Bedienhandlung bei Betätigung des angezeigten Bedienelementes (14) abbricht oder rückgängig macht.

6. Anordnung nach Anspruch 5, wobei diese in einem Fahrzeug vorgesehen ist und das Vorschlagssystem eine Bedienhandlung für ein Infotainmentsystem des Fahrzeugs empfiehlt.

7. Anordnung nach Anspruch 6, wobei die Information (11) über die automatisch ausgeführte Bedienhandlung auf einem Kombiinstrument (7) und/oder einer Head-up-Display-Anzeige (19) und das Bedienelement (14) zum Abbruch der automatisch ausgeführten Bedienhandlung auf einem weiteren, insbesondere seitlich vom Lenkrad angeordneten, Display (13) des Fahrzeugs angezeigt werden.

8. Anordnung nach Anspruch 7, wobei das seitlich vom Lenkrad angeordnete Display (13) als Touchscreen-Display ausgebildet ist und die automatisch ausgeführte Bedienhandlung durch Berührung der berührungsempfindlichen Oberfläche des Touchscreen-Displays an der Position des dargestellten Bedienelementes (14) abgebrochen oder rückgängig gemacht werden kann.

9. Anordnung nach Anspruch 7 oder 8, wobei die Information (11) über die automatisch ausgeführte Bedienhandlung auf dem Kombiinstrument (7) temporär in einem Teilbereich der Anzeige den aktuellen Kontext überlagert wird.

10. Kraftfahrzeug **dadurch gekennzeichnet, dass** es eine Anordnung gemäß einem der Ansprüche 5 bis 9 aufweist oder eingerichtet ist, ein Verfahren gemäß einem der Ansprüche 1 bis 4 auszuführen.

## Claims

1. A method for interacting with a proposal system with automated operating actions, wherein the method comprises the steps of:
- generating (1) a recommendation for an operating action;
- determining (2) a probability value for the execution of the recommended operating action;
- automatically executing (3) the recommended operating action if a high probability value is determined therefor;
- displaying (4) information (11) about the automatically executed operating action as well as an operating element (14) for terminating or undoing the automatically executed operating action;
- detecting (5), on the part of a user, an actuation of the indicated operating element (14);
- canceling or undoing (6) the automatically executed operating action upon actuation of the displayed operating element (14).

2. The method according to claim 1, wherein the information (11) about the automatically executed operating action is displayed on a first display (7), and the operating element (14) for terminating or undoing the automatically executed operating action is displayed on a second display (13).

3. The method according to claim 1 or 2, wherein the probability value for executing the recommended operating action is determined from the previous user behavior and/or external parameters.

4. The method according to claim 3, wherein the external parameters for determining the probability value include the current time and/or the current position of the user.

5. Assembly for interacting with a proposal system with automated operating actions, with a control unit (15), at least one display (7, 13, 19), and a detection unit (20), **characterized in that**
- the control unit (15) generates a recommendation to activate an operating action, determines a probability value for executing the recommended operating action, and automatically executes the recommended operating action if a high probability value therefor is determined;
- information (11) about the automatically executed operating action and an operating element (14) for terminating or undoing the automatically executed operating action is displayed on the at least one display (7, 13, 19);
- the detection unit (20) detects an actuation of the displayed operating element (14) by the user;
- and the control unit (15) terminates or undoes the automatically executed operating action upon actuation of the displayed operating element (14).

6. The assembly according to claim 5, wherein said assembly is provided in a vehicle, and the proposal system recommends an operating action for an infotainment system of the vehicle.

7. The assembly according to claim 6, wherein the information (11) about the automatically executed operating action is displayed on an instrument cluster (7) and/or a head-up display (19), and the operating element (14) for terminating the automatically executed operating action is displayed on a further display (13) of the vehicle, in particular arranged to the side of the steering wheel.

8. The assembly according to claim 7, wherein the display (13) arranged to the side of the steering wheel is designed as a touchscreen display, and the automatically executed operating action can be terminated or undone by touching the touch-sensitive surface of the touchscreen display at the position of the shown operating element (14).

9. The assembly according to claim 7 or 8, wherein the information (11) about the automatically executed operating action on the instrument cluster (7) is temporarily superimposed over the current context in a partial region of the display.

10. A motor vehicle, **characterized in that** it has an assembly according to one of claims 5 to 9, or is configured to execute a method according to one of claims 1 to 4.

## Revendications

1. Procédé d'interaction avec un système de recommandation à l'aide d'actions de commande automatisées, le procédé comprenant les étapes suivantes :
- génération (1) d'une recommandation pour une action de commande ;
- détermination (2) d'une valeur de probabilité pour l'exécution de l'action de commande recommandée ;
- exécution automatique (3) de l'action de commande recommandée, lorsqu'une valeur de probabilité élevée est déterminée pour celle-ci ;
- affichage (4) d'une information (11) concernant l'action de commande exécutée automatiquement ainsi que d'un élément de commande (14) pour l'interruption ou l'inversion de l'action de commande exécutée automatiquement ;
- détection (5) d'un actionnement de l'élément de commande (14) affiché par un utilisateur ;
- interruption ou inversion (6) de l'action de commande exécutée automatiquement lors de l'actionnement de l'élément de commande (14) affiché.

2. Procédé selon la revendication 1, dans lequel l'information (11) concernant l'action de commande exécutée automatiquement est affichée sur un premier écran (7) et l'élément de commande (14) pour l'interruption ou l'inversion de l'action de commande exécutée automatiquement est affiché sur un deuxième écran (13).

3. Procédé selon la revendication 1 ou 2, dans lequel la valeur de probabilité pour l'exécution de l'action de commande recommandée est déterminée à partir du comportement antérieur de l'utilisateur et/ou de paramètres extérieurs.

4. Procédé selon la revendication 3, dans lequel les paramètres extérieurs pour la détermination de la valeur de probabilité comprennent l'heure actuelle et/ou la position actuelle de l'utilisateur.

5. Système d'interaction avec un système de recommandation à l'aide d'actions de commande automatisées, comprenant une unité de commande (15), au moins un écran (7, 13, 19) et une unité de détection (20), **caractérisé en ce que**
- l'unité de commande (15) génère une recommandation de commande d'une action de commande, détermine une valeur de probabilité pour l'exécution de l'action de commande recommandée et exécute l'action de commande recommandée lorsqu'une valeur de probabilité élevée est déterminée pour celle-ci ;
- sur l'au moins un écran (7, 13, 19), une information (11) concernant l'action de commande exécutée automatiquement, ainsi qu'un élément de commande (14) pour l'interruption ou l'inversion de l'action de commande exécutée automatiquement sont affichés ;
- l'unité de détection (20) détecte un actionnement de l'élément de commande (14) affiché par un utilisateur ;
- et l'unité de commande (15) interrompt ou inverse l'action de commande exécutée automatiquement lors de l'actionnement de l'élément de commande (14) affiché.

6. Système selon la revendication 5, dans lequel celui-ci est prévu dans un véhicule et le système de recommandation recommande une action de commande pour un système d'infodivertissement du véhicule.

7. Système selon la revendication 6, dans lequel l'information (11) concernant l'action de commande exécutée automatiquement est affichée sur un instrument combiné (7) et/ou sur un affichage tête haute (19) et l'élément de commande (14) pour l'interruption de l'action de commande exécutée automatiquement est affiché sur un autre écran (13) du véhicule.

8. Système selon la revendication 7, dans lequel l'écran (13) disposé à côté du volant est conçu comme un écran tactile et l'action de commande exécutée automatiquement peut être interrompue ou inversée par un toucher de la surface sensible au toucher de l'écran tactile à la position de l'élément de commande (14) représenté.

9. Système selon la revendication 7 ou 8, dans lequel l'information (11) concernant l'action de commande exécutée automatiquement est superposée temporairement dans une partie de l'affichage du contexte actuel dans l'instrument combiné (7).

10. Véhicule automobile **caractérisé en ce qu'il** présente un système selon l'une quelconque des revendications 5 à 9 ou qu'il est conçu pour exécuter un procédé selon l'une quelconque des revendications 1 à 4.
